# EUROPEAN PATENT SPECIFICATION

(11) **EP 1 504 871 B1**
(45) Date of publication and mention of the grant of the patent: **07.11.2007**
(21) Application number: 04002424.2
(22) Date of filing: 04.02.2004
(51) Int. Cl.: B29C 45/07, B29C 31/04

(54) **Machine for the injection-molding of soles, technical articles and the like**
Spritzgiessmaschine zum Spritzgiessen von Sohlen, technischen Artikeln und dergleichen
Presse à injecter pour l'injection de semelles, d'articles techniques et similaires

(30) Priority: 07.08.2003 IT PD20030183
(43) Date of publication of application: 09.02.2005
(73) Proprietor: Main Group Corporation S.r.l., 35129 Padova (IT)
(72) Inventor: Lorenzin, Lorenzo, 35031 Abano Terme (Prov. of Padova) (IT)
(74) Representative: Modiano, Micaela Nadia

(56) References cited:
- US-A- 2 442 607
- PATENT ABSTRACTS OF JAPAN vol. 1996, no. 03, 29 March 1996 (1996-03-29) -& JP 07 308935 A (ASAHI OPTICAL CO LTD), 28 November 1995 (1995-11-28)
- PATENT ABSTRACTS OF JAPAN vol. 0112, no. 05 (M-603), 3 July 1987 (1987-07-03) & JP 62 025028 A (AISIN SEIKI CO LTD; others: 01), 3 February 1987 (1987-02-03)

## Description

The present invention relates to a machine for the injection-molding of soles, technical articles and the like.

Multiple-station injection-molding machines are generally composed of a plurality of presses arranged side by side, inside which the molds are arranged; said molds are generally composed of an upper mold part and a lower mold part.

The material to be molded is injected by means of an injection assembly provided with one or more injectors equipped to inject in a horizontal direction.

The injected material to be molded is generally thermoplastic material, rubber, ethyl vinyl acetate and the like.

The injection assembly travels on guides, tracing a substantially straight path or performing a translational motion from one press to the next adjacent press.

In these known molding machines, the nozzle of the injector feeds the mold by way of a substantially horizontal hole formed by two halves, a first half on the upper mold part and a second half on the lower mold part.

The escape of the material injected into the impression formed by the two closed mold parts is conveniently prevented by blocking the injection hole by means of a pin that is actuated by a hydraulic or pneumatic cylinder.

These known multiple-station injection-molding machines, while being widespread and appreciated commercially, have drawbacks.

A first drawback relates to the considerable overall dimensions of these machines, caused mainly by the horizontal injection assembly, which is suitable to slide laterally with respect to the presses arranged in a row or circle.

Moreover, in these machines the injector, after injecting into the last mold of the row, must return to the first mold of the same row, accordingly producing, with this movement, a considerable downtime.

This type of machine has a single working front, which is generally accessed by at least two operators, who by having to work side by side often hinder each other.

Another drawback is constituted by injection into a hole located on the mating plane of the two mold parts and with an axis that is substantially parallel to said plane.

The shape and arrangement of said hole, which constitutes the injection channel, in addition to producing a significant amount of sprue, cause problems in terms of mold clamping forces.

The clamping force that must be assuredly provided by the press takes into account two components produced by the injection operation.

A first component is the force that the injected material applies in the injection channel, which normally has a very narrow cross-section, whilst a second component is constituted by the force applied inside the impression by the material during cross-linking and expansion.

The presses of known machines are sized so as to contrast both of said forces and must be able to generate clamping forces of over 140 tons.

Presses capable of such tonnage are very heavy as well as inherently expensive and onerous in terms of electric power consumption.

Accordingly, the molds on which the presses act are made of very strong and therefore particularly expensive materials.

JP-A-07308935 discloses an injection-molding machine having a combination of features as set forth in the pre-characterizing portion of the appended claim 1.

The aim of the present invention is to provide a machine for injection-molding soles, technical articles and the like that is capable of obviating the drawbacks of known kinds of machine.

Within this aim, an object of the present invention is to provide a machine for injection-molding that has smaller dimensions and is more compact for an equal number of presses with respect to known types.

Another object of the present invention is to provide a machine for injection-molding that is capable of reducing downtimes to a minimum and therefore has greater productivity than known types.

A further object of the present invention is to provide an injection-molding machine that allows operators not to hinder each other in accessing the machine.

A still further object of the present invention is to provide an injection-molding machine that can be configured to obtain multiple-color products.

Another object of the present invention is to provide an injection-molding machine that is supplied with thermoplastic material, rubber, ethyl vinyl acetate, and the like.

Another object of the present invention is to provide a machine for the injection-molding of soles, technical articles and the like, that can be manufactured economically with known facilities and technologies.
In accordance with the invention, there is provided a machine for injection-molding of soles, technical articles and the like, as defined in the appended claims.

Further characteristics and advantages of the present invention will become better apparent from the following detailed description of a preferred but not exclusive embodiment thereof, illustrated by way of nonlimiting example in the accompanying drawings, wherein:

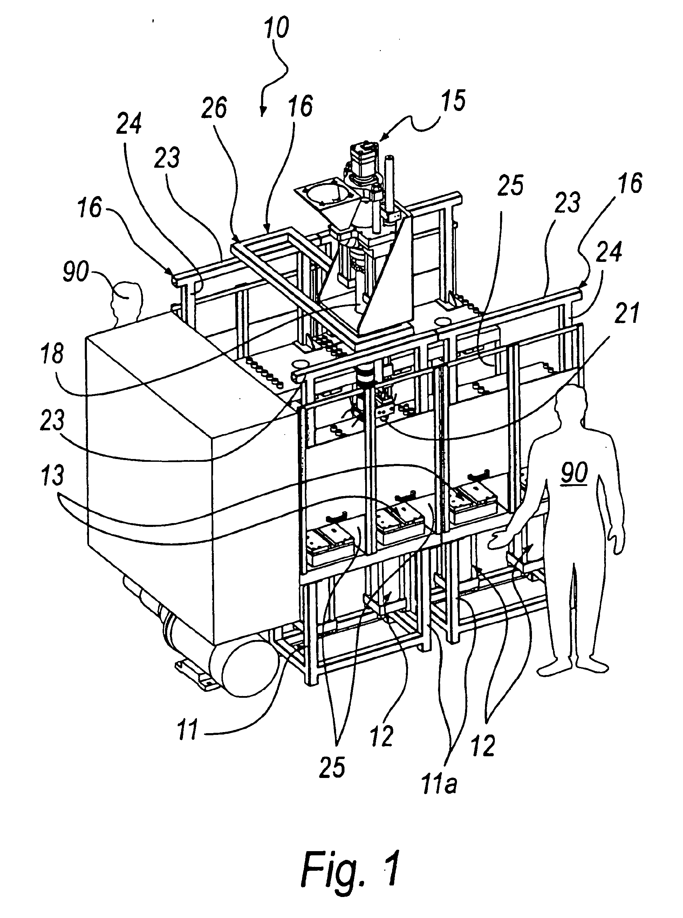

Figure 1 is a perspective view of a machine according to the invention;

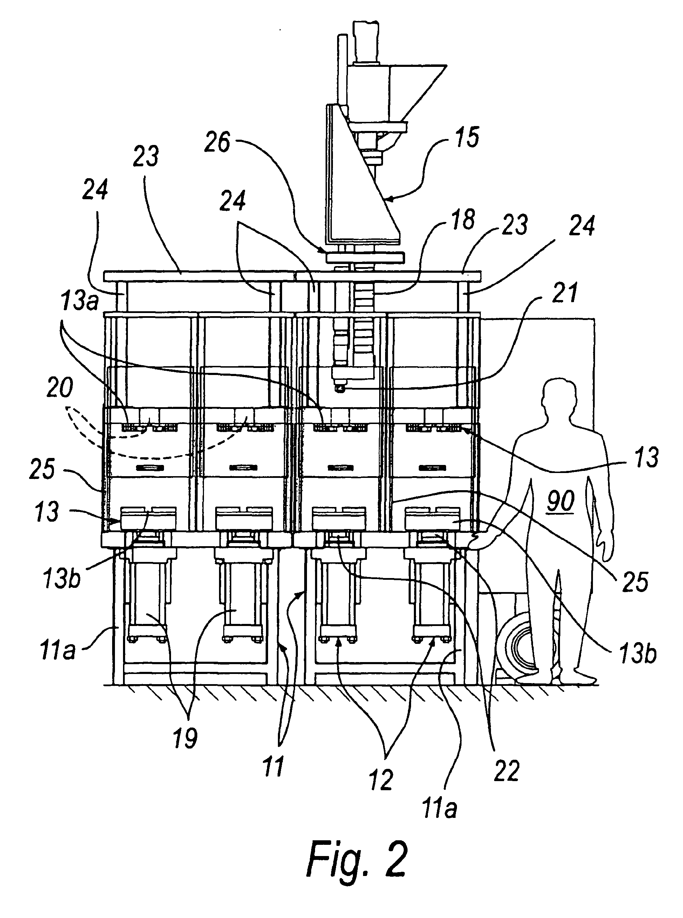

Figure 2 is a side view of a machine according to the invention as shown in Figure 1;

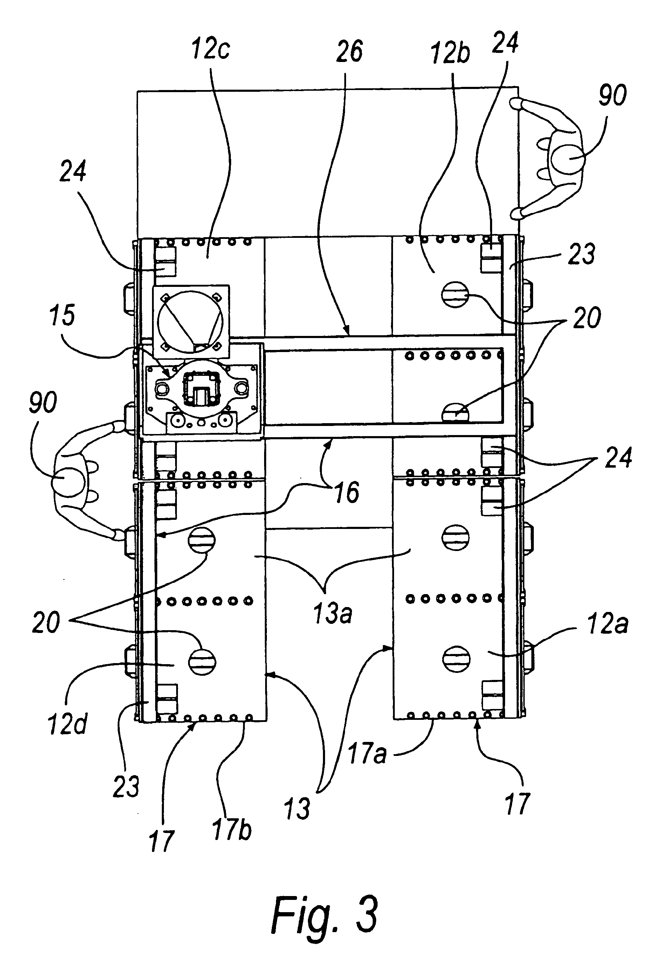

Figure 3 is a top view of a machine according to the invention as shown in Figures 1 and 2;
Figure 4 is a view of a mold according to the invention in a first step of an injection operation;
Figure 5 is a view of a mold according to the invention in a second step of an injection operation;
Figure 6 is a view of a mold according to the invention in a third step of an injection operation;
Figure 7 is a sectional view of a detail of a mold according to the invention;
Figure 8 is a view of a detail of a machine according to the invention;
Figure 9 is a view of the same detail shown in Figure 8 according to a different embodiment;
Figures 10-16 illustrate a sequence of movements of the movement means;

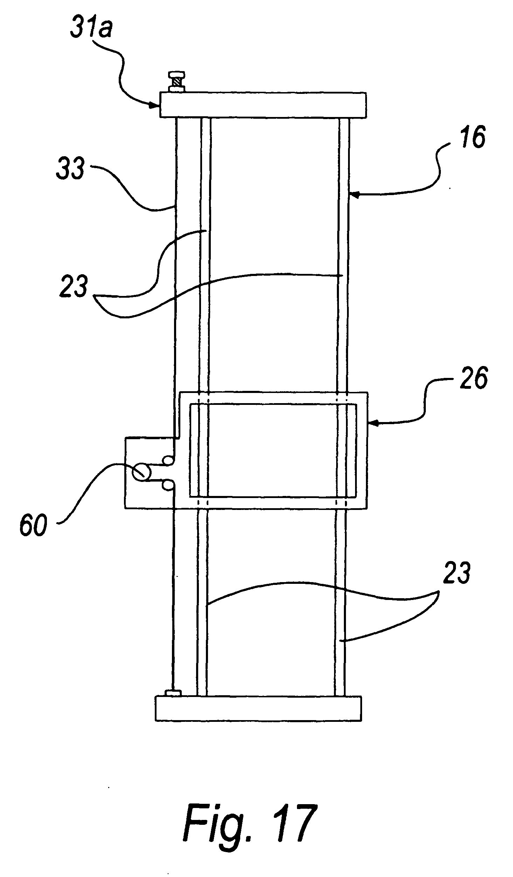

Figure 17 is a view of a different embodiment of the movement means;

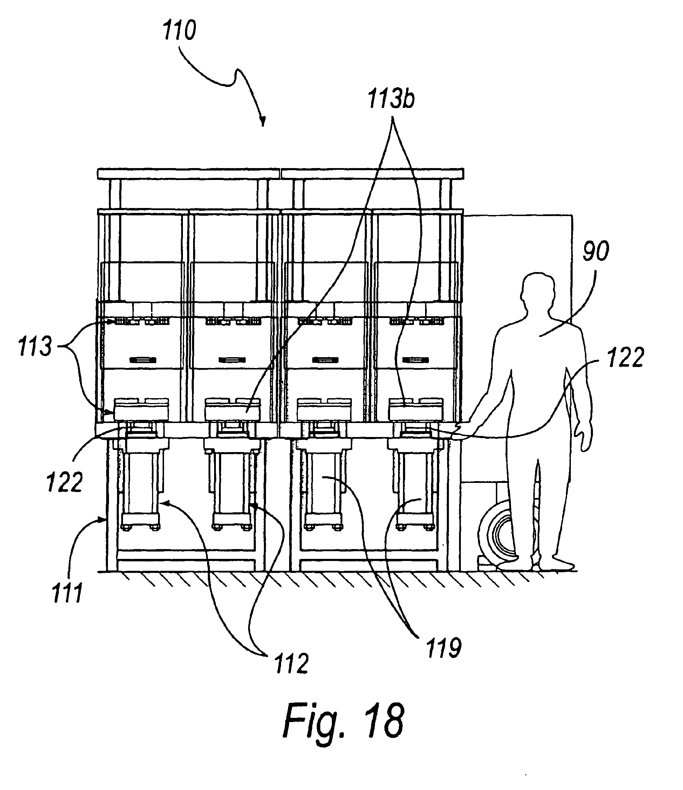

Figure 18 is a view of a machine structure;
Figure 19 is a perspective view of a detail of a machine according to the invention;
Figure 20 is another perspective view of the detail of Figure 19;
Figure 21 is a side view of a machine according to the invention in a second embodiment.

With reference to the figures, a machine for the injection-molding of soles, technical articles and the like according to the invention is generally designated by the reference numeral 10.

The machine 10 comprises a footing 11, which supports side by side a plurality of presses 12 that have a vertical closure motion.

In the example described herein there are eight presses 12.

The footing 11 is composed of four modular frames 11a, each of which supports two presses 12.

The presses 12 are provided with mold holders 13 for supporting corresponding molds 14.

Each mold is composed of an upper mold part 14a, onto which a lower mold part 14b closes.

The mold parts are fed by an injection assembly 15 that moves along appropriate guides.

For the injection assembly 15 there are means, designated by the reference numerals 16 and 30, for mutual relative motion between the injection assembly 15 and at least portions of the molds 14.

Said means for mutual relative motion between the injection assembly 15 and at least portions of the molds 14 comprise sliding guides 16 for the assembly 15 and means 30 for moving the injection assembly 15 on the guides 16.

The presses 12 and the respective mold holders 13 are arranged along two parallel and longitudinally adjacent rows 17.

Both parallel rows 17 are served by the same injection assembly 15, which is arranged above so as to inject substantially in a vertical direction.

The injection assembly 15 comprises in this case an injector 18.

The vertical injector 18 performs injection at the center of each press 12, accordingly operating in a balanced manner.

Such balanced injection allows lower tonnages than the ones of known machines to be sufficient for the clamping of the molds 14 on the part of the presses 12.

Accordingly, the molds 14 also are cheaper.

Each one of the presses 12 comprises a hydraulic actuator 19, which is suitable to generate an upward clamping force.

Each mold holder 13 is composed of an upper mold part holder 13a and a lower mold part holder 13b.

The upper mold part holder 13a has a through opening 20 that is suitable to allow an injection nozzle 21 of the injector 18 to rest directly on the underlying mold 14.

The through opening 20 is located at the center of each press 12.

The central arrangement of the opening 20 allows to obtain a balanced injection that requires the presses 12 to provide reduced closure tonnages with respect to known machines.

The lower mold part holder 13b is rigidly coupled to the stem 22 of the corresponding hydraulic actuator 19, and the stem 22 guides the lower mold part holder 13b and the associated lower mold part 14b upon closure of the mold 14.

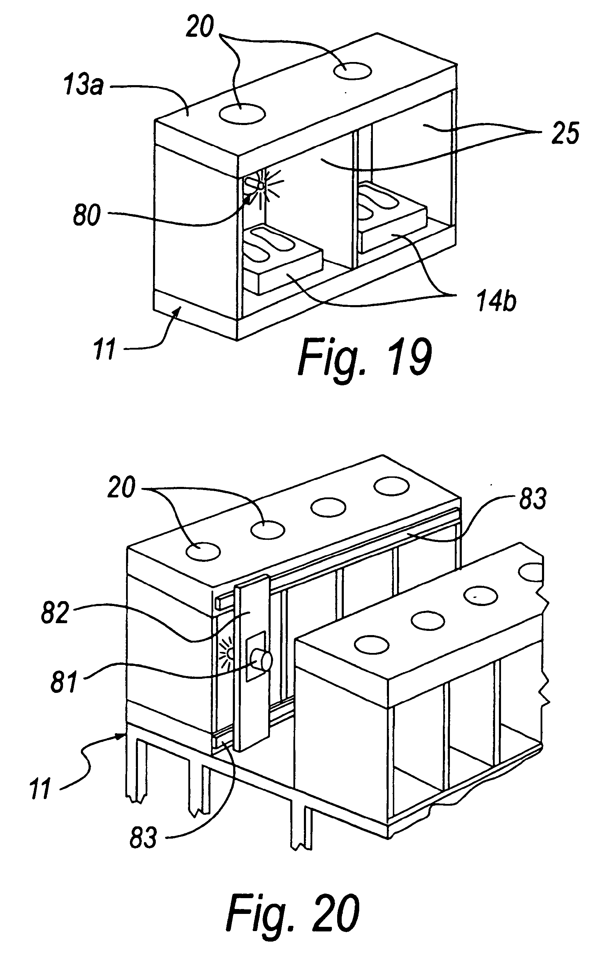

The two rows 17 are arranged at a mutual distance that allows the installation of means 80, shown in Figures 19 and 20, for automating the siliconization of the molds 14.

The automation means 80 are constituted by a siliconization robot 81 supported by a plate 82 that is suitable to slide on at least one longitudinal bar 83.

The bars 83 are two in the present embodiment.

A mold cleaning robot, not shown, can be arranged adjacent to the siliconization robot 81.

The guides 16 are constituted by four longitudinal members 23 aligned in pairs.

The longitudinal members 23 are supported by posts 24 that are fixed to the upper mold part holders 13a.

The upper mold part holders 13a in turn are supported by supporting shoulders 25.

A transverse rail 26 runs along the longitudinal members 23.

The injection assembly 15 rests on the rail 26 so that it can perform a translational motion.

The movement means 30 are suitable to act on two axes and conveniently make the injection assembly 15 trace a substantially rectangular path.

The movement means 30 comprise first translational motion means 31 and second translational motion means.

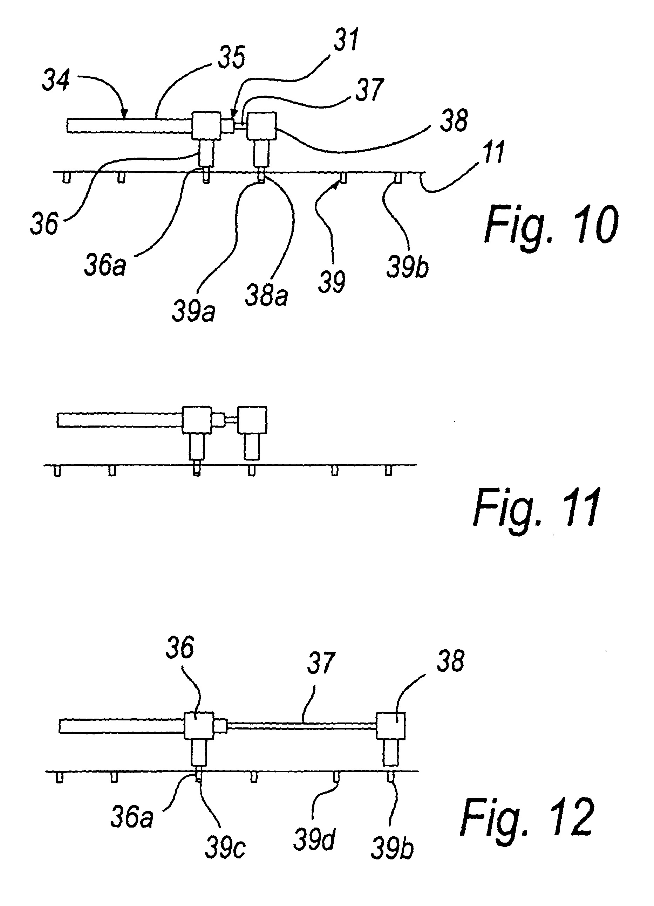

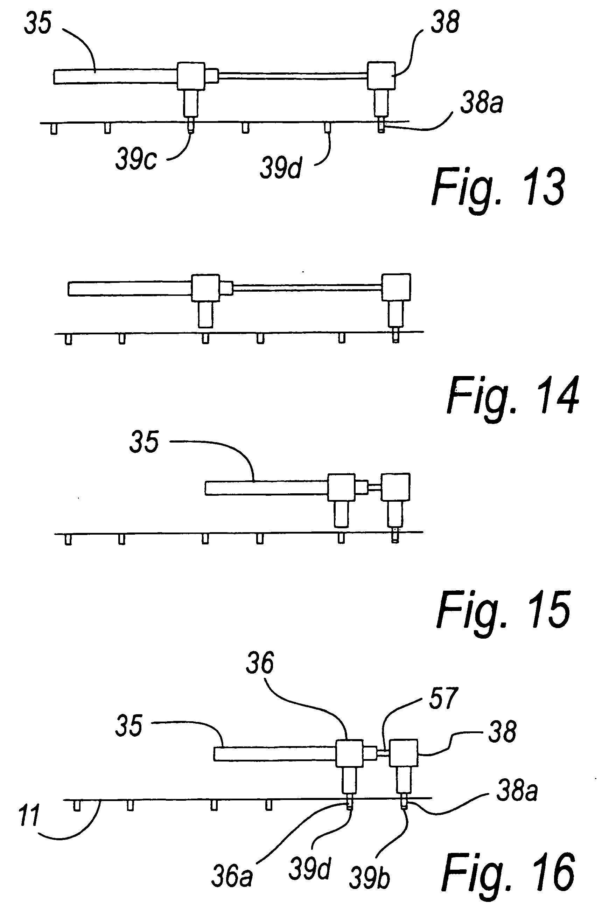

The first translational motion means 31, whose operating method is shown schematically in Figures 10 to 16, move the rail 26 with respect to the longitudinal members 23.

The second translational motion means, not shown, are constituted by actuation cylinders that act on the injection assembly 15, allowing it to move along the rail 26 and to perform a translational motion from one of the two rows 17 to the other.

The first translational motion means 31 comprise a horizontal hydraulic cylinder 34 to which the rail 26 is rigidly coupled.

A first vertical cylinder 36 is fixed to the jacket 35 of the horizontal cylinder 34, and the stem 37 of the horizontal cylinder 34 is provided at its end with a second vertical cylinder 38.

The sequence of movements of said first means is shown by figures 10 to 16, as mentioned.

In an exemplifying initial position, both vertical cylinders 36 and 38 have respective stems 36a and 38a that are lowered and inserted in complementarily shaped holes 39 in the footing 11.

The second vertical cylinder 38 extracts its own stem 38a from the first engagement hole 39a.

Then the horizontal cylinder 34 extends its own stem 37 until the second vertical cylinder 38 is arranged in the next holding position, where the cylinder 38 reinserts its own stem 38a in the underlying second hole 39b.

Then the stem 36a of the first vertical cylinder 36 is disengaged from a third hole 39c in which it is inserted, and the jacket 35, with the rail 26 rigidly coupled thereto, moves toward the second vertical cylinder 38 until it reaches a forth anchoring hole 39d.

Here, the first vertical cylinder 36 lowers its own stem 36a again into the hole 39d.

The first means for forward and backward translational motion 31 for the rail 26 are therefore substantially actuated hydraulically and can be managed easily by means of a low-cost set of electronic components.

The first means 31 allow to move the injection assembly 15 back and forth along the two rows 12.

A different embodiment of the first translational motion means 31a comprises a belt 33 that is stretched between the ends of the longitudinal members 23 and an electric motor 60 that is rigidly coupled to the injection assembly 15 and is suitable to engage the belt 33.

The first belt means 31a are constituted, as an alternative, by equivalent worm screw devices, rack devices and the like.

In practice, the movement means 30 move stepwise, by way of said first means 31, the injection assembly 15 from a first press 12a of a first row 17a to a last press 12b of the first row 17a.

At this point, the second means move the assembly 15 onto the second row 17b, where the first means 31 make it perform a translational motion from the press 12c, which is parallel and laterally adjacent to the last press 12b, to the end press 12d, which is parallel and laterally adjacent to the first press 12d.

In this manner, the assembly 15 traces a substantially rectangular path that is conveniently similar to the path that is typical of circular machines.

The movement along two axes described above allows to minimize the downtimes caused in known types of linear machine by the return motion of the injection assembly from the last press to the first press, with advantages in terms of productivity.

An injection-molding machine 10 according to the invention is very compact with respect to known types by virtue of the position of the injection assembly 15, which is arranged above the presses 12 and therefore above the molds 14 rather than laterally.

A machine 10 with eight presses, such as the one described herein by way of example, has plan dimensions that are less than one tenth of the dimensions of an eight-press machine of a known type manufactured by the same Applicant.

The arrangement along two parallel and adjacent rows 17 allows to obtain, in addition to the rectangular and conveniently closed path of the assembly 15, two separate work fronts for two operators 90, who therefore do not hinder each other as occurs with known linear machines.

In a different embodiment of the machine 10, the injection assembly 15 comprises two transversely adjacent injectors, not shown, by means of which it is possible to obtain multiple-color molded products.

The two injectors move only longitudinally, each injector being arranged on one of the two rows 17.

In this embodiment, two molds 14 arranged side by side share the same lower mold part 14b.

The lower mold part is arranged below a first upper mold part so as to form a first impression inside which material of a first color is injected.

A partial single-color product is obtained when said first mold is opened.

The lower mold part, containing the single-color intermediate component, performs a translational motion, by way of movement means, on suitable guides, not shown, until it is arranged below the laterally adjacent second upper mold part.

When the second mold is closed, material of a second color is injected onto the intermediate component so as to form a two-color final product.

In a further embodiment, at least two injectors are longitudinally adjacent.

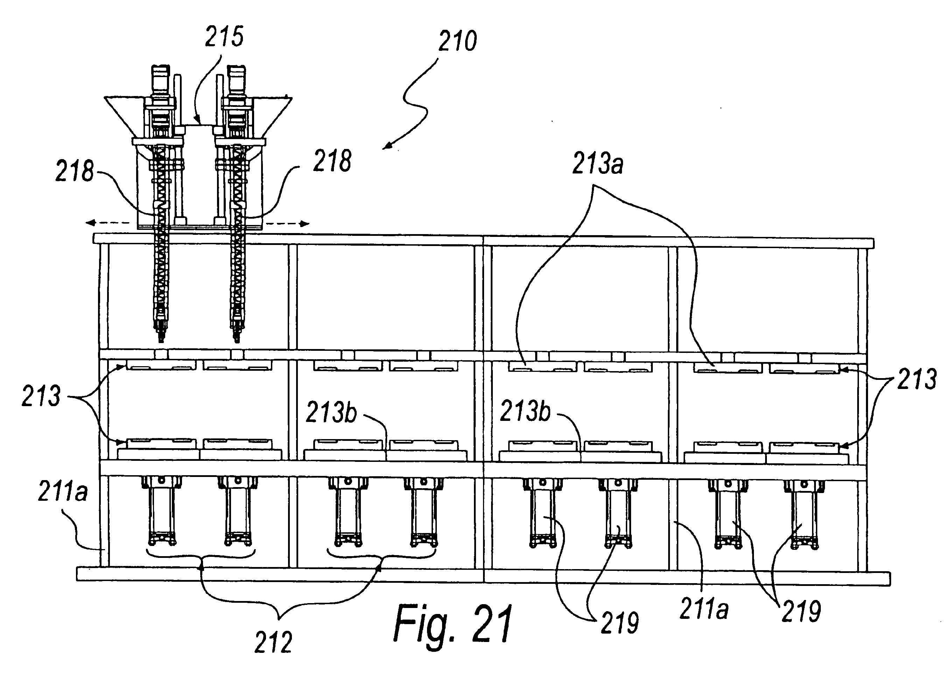

An example of this further embodiment is illustrated in Figure 21 and designated by the reference numeral 210, and has an injection assembly 215 that is provided with two longitudinally adjacent injectors 218.

The machine 210 comprises mold holders 213 that are each capable of accommodating two molds 14 arranged side by side.

Each lower mold part holder 213b is supported and pushed toward the upper mold part holder 213a by two hydraulic actuators 219 that are arranged so as to obtain a balanced injection.

In a particular embodiment of such further embodiment 210, it is possible to provide only one of the two actuators 219, arranged centrally with respect to the mold part holder 213b that it supports.

The machine 210 is constituted by four modular frames 211a, which are arranged on two parallel rows of two frames, each of which supports two presses 212.

Each press 212 is provided with one of the mold holders 213 for a pair of the molds 14 arranged side by side; each mold holder 213, as mentioned, is supported by two of said at least one hydraulic actuators 219.

The two injectors 218 simultaneously inject into two molds 14 that are associated with the same mold holder 213.

In this additional embodiment, each injector is arranged above a mold in order to perform a single-color injection.

In general, an assembly with at least two injectors then advances longitudinally by as many molds as there are injectors in order to perform a subsequent single-color molding operation.

At the end of the row of presses, the assembly performs a transverse translational motion on the adjacent row.

The same single-color product is therefore obtained in as many different colors as there are injectors fitted on the machine.

The present invention also relates to the mold 14, which as mentioned is composed of an upper mold part 14a that is suitable to close vertically a lower mold part 14b.

The upper mold part 14a and the lower mold part 14b are associated with the corresponding upper mold part holder 13a and lower mold part holder 13b of the corresponding press 12.

Each one of the molds 14 is characterized in that the upper mold part 14a has an injection hole 40 that has a substantially vertical axis.

Each mold 14 has closure means 41 that are suitable to prevent the escape of an injected molding material 50.

The closure means 41 are constituted by a one-way valve 42 that is integrated at the injection hole 40.

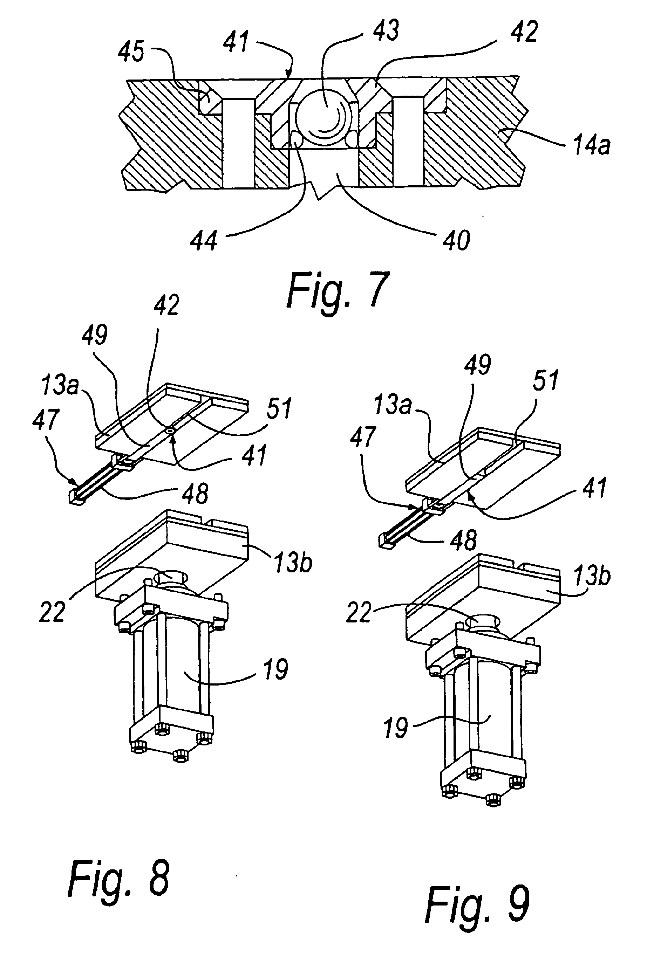

In the inactive position, shown in Figure 7, the ball 43 with which the valve 42 is provided rests on at least three supporting protrusions 44 that are monolithic with the valve body 45.

The protrusions 44 allow the injected material 50 to flow beyond the ball 43 and reach the impression 46 of the mold 14.

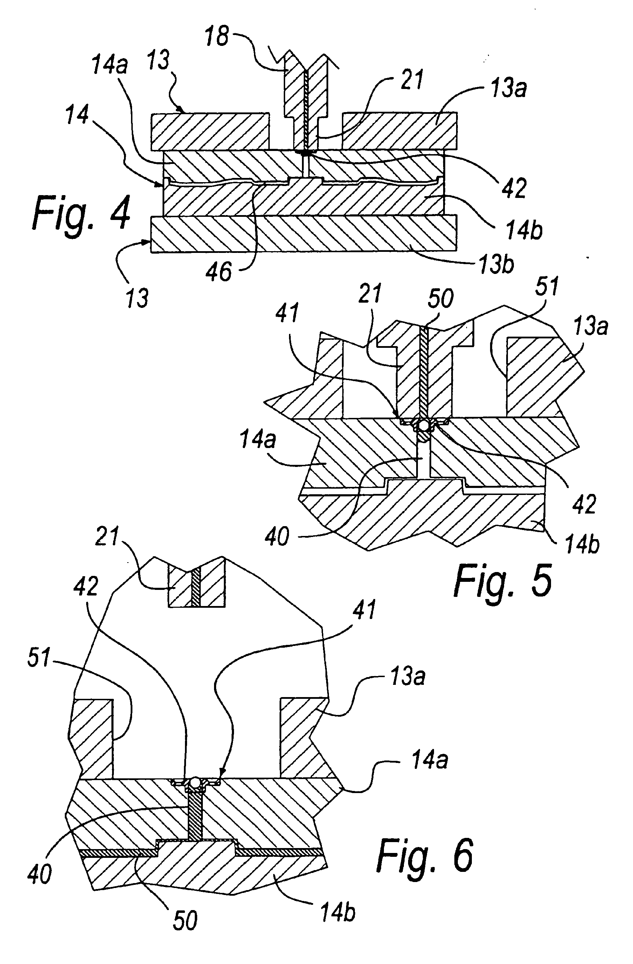

At the end of the injection operation, shown in its main steps by Figures 4 to 6, the nozzle 21 is moved away, clearing the injection hole 40.

The injected material 50 expands, pushing the ball 43 upward so as to block the hole 40.

The closure means 41, in a constructive variation, are completed by a guillotine device 47 that is provided on the upper mold part holder 13a.

The guillotine device 47 comprises a jack 48, which is fixed to the upper mold part holder 13a.

The jack 48 is functionally connected to a gate 49 that is suitable to slide in a complementarily shaped channel 51 until the injection hole 40 is blocked.

The guillotine device 47 is designed to eliminate the problems in removing flash of material 50 that exits from the hole 40, improving the seal of the closure.

In another constructive variation, the closure means 41 are constituted by the guillotine device 47 alone.

The described one-way valve 42 for the injection hole 40 is constructively simpler and cheaper to provide than known pin means.

Injection from above allowed by the opening 20 and by the vertical injection hole 40 entails as a main advantage the shortening of the injection channel, which substantially is reduced to the hole 40 alone.

Moreover, the injection hole 40 is shorter than the average of the injection holes of known molds, indeed by way of its central arrangement on the upper portion of the upper mold part 14a, which allows to connect the injection nozzle 21 and the impression of the mold 14 along a shorter path.

This reduction of the injection channel produces a considerable reduction of waste and a reduction in the force that the press 12 has to apply in order to clamp the mold 14 in an optimum manner.

An already-mentioned first component of the force that the press 12 contrasts is in fact the force that the injected material applies in the injection channel, which usually has a very narrow cross-section.

This component, by reducing the injection channel, is accordingly reduced considerably.

The clamping force that a press has to apply in order to close a mold 14 therefore decreases from over 140 tons in presses of known machines to approximately 40 tons.

Such a reduction allows to provide presses that have substantially reduced dimensions and costs, together with drastically reduced electric power consumption costs.

A direct consequence of the reduction of the clamping force is a reduction in the costs of the molds, which, by having to withstand a reduced compression, can be structurally less strong, within the constraints set by the pressures that they must in any case withstand.

This reduced resistance that the molds require leads to a further saving in terms of material used to produce the molds and in terms of manufacturing technology that can be used in obtaining said molds, which can be manufactured cheaply by casting.

Like the machine 10, a machine structure 110 comprises a supporting footing 111, which supports side by side a plurality of presses 112 that have a vertical closure motion.

The presses 112 are provided with mold holders 113 for supporting corresponding molds 14 as described above.

The structure 110 also has presses 112 and respective mold holders 113 in two parallel and longitudinally adjacent rows 117.

In practice it has been found that the present invention solves the problems noted in conventional types of machine for the injection-molding of soles, technical articles and the like.

In particular, the present invention provides an injection-molding machine that is smaller and more compact for an equal number of presses with respect to known types.

Moreover, the present invention provides an injection-molding machine that is capable of minimizing downtimes and therefore of greater productivity than known types.

Further, the present invention provides an injection-molding machine that allows operators not to hinder one another in accessing the machine.

Further, the present invention provides an injection-molding machine that can be fed with thermoplastic material, rubber, ethyl vinyl acetate and the like.

Further, the present invention provides an injection-molding machine between whose rows it is possible to install robotized siliconization means for said molds.

Finally, the present inventions provide a machine for the injection-molding of soles, technical articles and the like, that can be manufactured cheaply with known facilities and technologies.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for injection-molding of soles, technical articles and the like, of the type that comprises a footing (11) that supports a plurality of presses with a vertical closure motion provided with mold holders (13, 213) for supporting corresponding molds (14), said molds being fed by at least one injection assembly (15, 215), said at least one injection assembly (15, 215) being arranged above the presses (12) in order to inject substantially in a vertical direction, means (16, 30) for mutual relative motion between said injection assembly and at least portions of said molds (14) being provided, the machine being **characterized in that** said presses (12) and said respective mold holders (13, 213) are arranged in two parallel and longitudinally adjacent rows (17, 17a, 17b), both of said two parallel rows (17, 17a, 17b) being served by the same said at least one injection assembly (15, 215) arranged in an upper region in order to inject substantially in a vertical direction.

2. The machine according to claim 1, **characterized in that** said injection assembly (15, 215) comprises at least one injector (18, 218).

3. The machine according to one or more of the preceding claims, **characterized in that** each one of said presses (12) comprises at least one hydraulic actuator (19) that is adapted to generate an upward clamping force.

4. The machine according to one or more of the preceding claims, **characterized in that** the upper mold part holder (13a, 213a) of each one of said mold holders (13, 213) has a through opening (20) that allows an injection nozzle (21) of said at least one injector (18, 218) to rest directly on an associated underlying mold (14).

5. The machine according to one or more of the preceding claims, **characterized in that** said through opening (20) is arranged centrally with respect to the mold part holder (13a).

6. The machine according to one or more of the preceding claims, **characterized in that** the lower mold part holder (13b) of each one of said mold holders (13) is monolithic with the stem (22) of the corresponding at least one hydraulic actuator (19), said stem (22) being adapted to guide said lower mold part holder (13b) and the associated lower mold part (14b) upon closure of said mold (14).

7. The machine according to one or more of claims 1 to 4 and 6, **characterized in that** it has an injection assembly (215) that is provided with two injectors (218) that are longitudinally adjacent.

8. The machine according to claim 7, **characterized in that** it comprises mold holders (213) that are each capable of accommodating a pair of molds (14) arranged side by side.

9. The machine according to one or more of claims 7 and 8, **characterized in that** each lower mold part holder (213b) is supported by two of said at least one hydraulic actuators (219).

10. The machine according to one or more of claims 7 to 9, **characterized in that** it is constituted by four modular frames (211a), each of which supports two presses (212), each press (212) being provided with one of said mold holders (213) for a pair of said molds (14) arranged side by side, each mold holder (213) being supported by two of said at least one hydraulic actuators (219).

11. The machine according to one or more of the preceding claims, **characterized in that** said two rows (17) are arranged at a mutual distance from each other that allows the installation of means (80) for automating siliconization and cleaning of the molds (14).

12. The machine according to claim 11, **characterized in that** said automation means (80) are constituted by a siliconization robot (81) supported by a plate (82) that is adapted to slide on at least one longitudinal bar (83).

13. The machine according to one or more of the preceding claims, **characterized in that** said means (16, 30) for relative mutual motion between said injection assembly and at least portions of said molds (14) comprise guides (16) and means (30) for moving said injection assembly (15, 215) on said guides (16).

14. The machine according to claim 13, **characterized in that** said guides (16) are constituted by at least two longitudinal members (23) on which a transverse rail (26) runs, said injection assembly (15, 215) resting on said transverse rail (26) so as to perform a translational motion, said longitudinal members (23) being supported by posts (24) that are fixed in turn to the upper mold part holders (13a, 213a) of said presses (12, 212).

15. The machine according to one or more of the preceding claims, **characterized in that** said movement means (30) operate on two axes.

16. The machine according to one or more of the preceding claims, **characterized in that** said movement means (30) make said injection assembly (15, 215) trace a substantially rectangular path.

17. The machine according to claim 14, **characterized in that** said movement means (30) comprise first means (31) for the translational motion of said rail (26) with respect to said longitudinal members (23) and second means (32) for the translational motion of said injection assembly (15) with respect to said rail (26).

18. The machine according to claim 17, **characterized in that** said second translational motion means (32) are provided by a belt (33) that is stretched between the ends of said rail (26) and an electric motor (60) that is monolithic with said injection assembly (15, 215) and is adapted to engage in said belt (33).

19. The machine according to one or more of the preceding claims, **characterized in that** it comprises at least four presses (12) and corresponding mold holders (13) that are arranged along two parallel and symmetrical rows, each of which comprises half of said at least four presses (12).

## Patentansprüche

1. Eine Maschine zum Spritzgiessen von Sohlen, technischen Artikel und dergleichen, vom Typ der einen Sockel (11), der eine Mehrzahl von Pressen (12) mit einer vertikalen Schließbewegung stützt, die mit Formhaltern (13, 213) zum Stützen entsprechender Formen (14) bereitgestellt sind, wobei die Formen von mindestens einer Einspritzbaugruppe (15, 215) beschickt werden, wobei die mindestens eine Einspritzbaugruppe (15, 215) über den Pressen (12) angeordnet ist, um in einer im Wesentlichen senkrechten Richtung einzuspritzen, wobei Mittel (16, 30) zur gegenseitigen relativen Bewegung zwischen der Einspritzbaugruppe und mindestens Teilen der Formen (14) bereitgestellt sind, umfasst, wobei die Maschine (10, 210) **dadurch gekennzeichnet ist, dass** die Pressen (12) und die entsprechenden Formhalter (13, 213) in zwei parallelen und längs benachbarten Reihen (17, 17a, 17b) angeordnet sind, wobei beide der zwei parallelen Reihen (17, 17a, 17b) von der gleichen in einem oberen Bereich angeordneten mindestens einen Einspritzbaugruppe (15, 215) versorgt sind, um in einer im Wesentlichen senkrechten Richtung einzuspritzen.

2. Die Maschine gemäß Anspruch 1, **dadurch gekennzeichnet, dass** die Einspritzbaugruppe (15, 215) mindestens einen Injektor (18, 218) umfasst.

3. Die Maschine gemäß einem oder mehreren der vorhergehenden Ansprüche, **dadurch gekennzeichnet, dass** jede einzelne Presse (12) mindestens einen hydraulischen Stellantrieb (19) umfasst, der zum Erzeugen einer Aufwärtsklemmkraft angepasst ist.

4. Die Maschine gemäß einem oder mehreren der vorhergehenden Ansprüche, **dadurch gekennzeichnet, dass** der obere Formteilhalter (13a, 213a) jedes einzelnen Formhalters (13, 213) eine Durchgangsöffnung (20) aufweist, die einer Einspritzdüse (21) des mindestens einen Injektors (18, 218) erlaubt, auf einer zugehörigen darunterliegenden Form (14) unmittelbar aufzuliegen.

5. Die Maschine gemäß einem oder mehreren der vorhergehenden Ansprüche, **dadurch gekennzeichnet, dass** die Durchgangsöffnung (20) in Bezug auf die Formteilhalter (13a) zentral angeordnet ist.

6. Die Maschine gemäß einem oder mehreren der vorhergehenden Ansprüche, **dadurch gekennzeichnet, dass** der untere Formteilhalter (13b) jedes einzelnen Formhalters (13) mit dem Schaft (22) des korrespondierenden mindestens einem hydraulischen Stellantriebs (19) monolithisch ist, wobei der Schaft (22) angepasst ist, um den unteren Formteilhalter (13b) und das zugehörige untere Formteil (14b) beim Schliessen der Form (14), zu führen.

7. Die Maschine gemäß einem oder mehreren der Ansprüche 1 bis 4 und 6, **dadurch gekennzeichnet, dass** sie eine Einspritzbaugruppe (215) aufweist, die mit zwei Injektoren (218) bereitgestellt ist, die der Länge nach benachbart sind.

8. Die Maschine gemäß Anspruch 7, **dadurch gekennzeichnet, dass** sie Formhalter (213) umfasst, die zur Aufnahme eines nebeneinander angeordneten Paars von Formen (14) geeignet sind.

9. Die Maschine gemäß einem oder mehreren der Ansprüche 7 und 8, **dadurch gekennzeichnet, dass** jeder untere Formteilhalter (213b) von zwei, des mindestens einen, hydraulischen Stellantrieben (219) gestützt ist.

10. Die Maschine gemäß einem oder mehreren der Ansprüche 7 bis 9, **dadurch gekennzeichnet, dass** es von vier Modulrahmen (211a) gebildet ist, von denen jeder zwei Pressen (212) unterstützt, wobei jede Presse (212) mit einem der Formhalter (213) für ein nebeneinander angeordnetes Paar Formen (14) bereitgestellt ist, wobei jeder Formhalter (213) von zwei, des mindestens einen, hydraulischen Stellantrieben (219) gestützt ist.

11. Die Maschine gemäß einem oder mehreren der vorhergehenden Ansprüche, **dadurch gekennzeichnet, dass** die zwei Reihen (17) in einem gegenseitigen Abstand voneinander angeordnet sind, der die Installation von Mitteln (80) zur Automatisierung der Silikonisierung und Reinigung der Formen (14) ermöglicht.

12. Die Maschine gemäß Anspruch 11, **dadurch gekennzeichnet, dass** die Automatisierungsmittel (80) von einem Silikonisierungsroboter (81) gebildet sind, der von einer Platte (82) gestützt ist, die zum Gleiten auf mindestens einer Längsschiene (83) angepasst ist.

13. Die Maschine gemäß einem oder mehreren der vorhergehenden Ansprüche, **dadurch gekennzeichnet, dass** die Mittel (16, 30) zur gegenseitigen relativen Bewegung zwischen der Einspritzbaugruppe und mindestens Teilen der Formen (14) Führungen (16) und Mittel (30) zum Bewegen der Einspritzbaugruppe (15, 215) auf den Führungen (16) umfasst.

14. Die Maschine gemäß Anspruch 13, **dadurch gekennzeichnet, dass** die Führungen (16) von mindestens zwei Längselementen (23) gebildet sind, auf denen eine Querschiene (26) läuft, die Einspritzbaugruppe (15, 215) auf der Querschiene (26) aufliegend, um eine Translationsbewegung auszuführen, wobei die Längselemente (23) von Pfosten (24) gestützt sind, die abwechselnd an den oberen Formteilhaltem (13a, 213a) der Pressen (12, 212) befestigt sind.

15. Die Maschine gemäß einem oder mehreren der vorhergehenden Ansprüche, **dadurch gekennzeichnet, dass** die Bewegungsmittel (30) auf zwei Achsen operieren.

16. Die Maschine gemäß einem oder mehreren der vorhergehenden Ansprüche, **dadurch gekennzeichnet, dass** die Bewegungsmittel (30) einen die Einspritzbaugruppe (15, 215) im Wesentlichen rechteckigen Weg verfolgen lassen.

17. Die Maschine gemäß Anspruch 14, **dadurch gekennzeichnet, dass** die Bewegungsmittel (30) erste Mittel (31) für die Translationsbewegung der Schiene (26) in Bezug auf die Längselemente (23) und zweite Mittel (32) für die Translationsbewegung der Einspritzbaugruppe (15) in Bezug auf die Schiene (26) umfassen.

18. Die Maschine gemäß Anspruch 17, **dadurch gekennzeichnet, dass** die zweiten Translationsbewegungsmittel (32) von einem Riemen (33) bereitgestellt sind, der zwischen den Enden der Schiene (26) und einem Elektromotor (60), der mit der Einspritzbaugruppe (15, 215) monolithisch ist und zum Eingriff in den Riemen (33) angepasst ist, gespannt ist.

19. Die Maschine gemäß einem oder mehreren der vorhergehenden Ansprüche, **dadurch gekennzeichnet, dass** sie mindestens vier Pressen (12) und entsprechende Formhalter (13) umfasst, die entlang von zwei parallelen und symmetrischen Reihen angeordnet sind, von denen jede die Hälfte der mindestens vier Pressen (12) umfasst.

## Revendications

1. Machine pour le moulage par injection de semelles, d'articles techniques et similaires, du type comprenant un pied (11) qui supporte une pluralité de presses (12) avec un mouvement de fermeture verticale muni de supports de moule (13-213) pour supporter des moules correspondants (14), lesdits moules étant alimentés par au moins un ensemble d'injection (15, 215), ledit au moins un ensemble d'injection (15, 215) étant agencé au-dessus des presses (12) afin d'injecter dans une direction sensiblement verticale, des moyens (16, 30) pour un mouvement relatif réciproque entre ledit ensemble d'injection et au moins des parties desdits moules (14) étant prévus, la machine étant **caractérisée en ce que** lesdites presses (12) et lesdits supports de moule (13, 213) respectifs sont agencés en deux rangées (17, 17a, 17b) parallèles et longitudinalement adjacentes, lesdits deux rangées parallèles (17, 17a, 17b) étant servies par le même dit au moins ensemble d'injection (15, 215) agencé dans une région supérieure afin d'injecter dans une direction sensiblement verticale.

2. Machine selon la revendication 1, **caractérisée en ce que** ledit ensemble d'injection (15, 215) comprend au moins un injecteur (18, 218).

3. Machine selon une ou plusieurs des revendications précédentes, **caractérisée en ce que** chacune desdites presses (12) comprend au moins un actionneur hydraulique (19) qui est adapté pour générer une force de serrage vers le haut.

4. Machine selon une ou plusieurs des revendications précédentes, **caractérisée en ce que** le support supérieur de partie de moule (13a, 213a) de chacun desdits supports de moule (13, 213) présente une ouverture traversante (20) qui permet à une buse d'injection (21) dudit au moins un injecteur (18, 218) de s'appuyer directement sur un moule sous-jacent associé (14).

5. Machine selon une ou plusieurs des revendications précédentes, **caractérisée en ce que** ladite ouverture traversante (20) est agencée centralement par rapport au support de partie de moule (13a).

6. Machine selon une ou plusieurs des revendications précédentes, **caractérisée en ce que** le support inférieur de partie de moule (13b) de chacun desdits supports de moule (13) est monolithique avec la tige (22) du au moins un actionneur hydraulique (19) correspondant, ladite tige (22) étant adaptée pour guider ledit support inférieur de partie de moule (13b) et la partie de moule inférieure associée (14b) à la fermeture dudit moule (14).

7. Machine selon une ou plusieurs des revendications 1 à 4 et 6, **caractérisée en ce qu'**elle présente un ensemble d'injection (215) muni de deux injecteurs (218) qui sont longitudinalement adjacents.

8. Machine selon la revendication 7, **caractérisée en ce qu'**elle comprend des supports de moule (213) qui sont chacun aptes à recevoir une paire de moules (14) agencés côte à côte.

9. Machine selon une ou plusieurs des revendications 7 et 8, **caractérisée en ce que** chaque support inférieur de partie de moule (213b) est supporté par deux desdits au moins un actionneur hydraulique (19).

10. Machine selon une ou plusieurs des revendications 7 à 9, **caractérisée en ce qu'**elle est constituée par quatre cadres modulaires (211a), chacun desquels supporte deux presses (212), chaque presse (212) étant munie d'un desdits supports de moule (213) pour une paire desdits moules (14) agencés côte à côte, chaque support de moule (213) étant supporté par deux desdits au moins un actionneur hydraulique (219).

11. Machine selon une ou plusieurs des revendications précédentes, **caractérisée en ce que** lesdits deux rangées (17) sont agencées à une distance mutuelle l'une de l'autre qui permet l'installation de moyens (80) automatique de siliconage et de nettoyage des moules (14).

12. Machine selon la revendication 11, **caractérisée en ce que** lesdits moyens d'automatisation (80) sont constitués par un robot de siliconage (81) supporté par une plaque (82) qui est adaptée pour coulisser sur au moins une barre longitudinale (83).

13. Machine selon une ou plusieurs des revendications précédentes, **caractérisée en ce que** lesdits moyens (16, 30) pour le mouvement réciproque relatif entre ledit ensemble d'injection et au moins des parties desdits moules (14) comprennent des guides (16) et des moyens (30) pour déplacer ledit ensemble d'injection (15, 215) sur lesdits guides (16).

14. Machine selon la revendication 13, **caractérisée en ce que** lesdits guides (16) sont constitués par au moins deux membres longitudinaux (23) sur lesquels coure un rail transversal (26), ledit ensemble d'injection (15, 215) reposant sur ledit rail transversal (26) de sorte à réaliser un mouvement translationnel, lesdits membres longitudinaux (23) étant supportés par des montants (24) qui sont fixés à leur tour aux supports supérieurs de partie de moule (13a, 213a) desdites presses (12, 212).

15. Machine selon une ou plusieurs des revendications précédentes, **caractérisée en ce que** lesdits moyens de déplacement (30) opèrent sur deux axes.

16. Machine selon une ou plusieurs des revendications précédentes, **caractérisée en ce que** lesdits moyens de déplacement (30) font tracer audit ensemble d'injection (15, 215) un parcours sensiblement rectangulaire.

17. Machine selon la revendication 14, **caractérisée en ce que** lesdits moyens de déplacement (30) comprennent des premiers moyens (31) pour le mouvement translationnel dudit rail (26) par rapport audits membres longitudinaux (23) et des deuxièmes moyens (32) pour le mouvement translationnel dudit ensemble d'injection (15) par rapport audit rail (26).

18. Machine selon la revendication 17, **caractérisée en ce que** lesdits deuxièmes moyens de mouvement translationnel (32) sont munis d'une courroie (33) qui est tendue entre les extrémités dudit rail (26) et un moteur électrique (60) qui est monolithique avec ledit ensemble d'injection (15, 215) et qui est adapté pour venir en prise avec ladite courroie (33).

19. Machine selon une ou plusieurs des revendications précédentes, **caractérisée en ce qu'**elle comprend au moins quatre presses (12) et supports de moules correspondants (13) qui sont agencés le long de deux rangées parallèles et symétriques, chacune desquelles comprend la moitié desdites au moins quatre presses (12).
